# EUROPEAN PATENT APPLICATION

(11) **EP 1 204 028 A1**
(43) Date of publication of application: **08.05.2002**
(21) Application number: 00309624.5
(22) Date of filing: 31.10.2000
(51) Int. Cl.: G06F 11/14

(54) **Computer file storage and recovery method**

(71) Applicant: Hewlett-Packard Company, A Delaware Corporation, Palo Alto, CA 94304 (US)
(72) Inventor: Watkins, Mark Robert, Westbury Park, Bristol BS6 7SR (GB)
(74) Representative: Lawman, Matthew John Mitchell

(57) **Abstract**

A fileserver (F) connected to client computers (C₁) by a network includes a data store (4) partitioned into one or more client-accessible volumes (8 to 16). The data store is also partitioned into one or more back-up volumes (8' to 16') of a client-accessible volume, which will permit reversal of the modification of the contents of said file, if a client (C₁) requests restoration of said file to a previous version. Such a configuration of fileserver allows clients to restore the fileserver files to various previous versions without recourse to the more time-consuming process of retrieving required reconstruction data from, for example, a tape streamer back-up system.

## Description

### BACKGROUND OF THE INVENTION

### Technical Field

This invention relates to a method of storing and recovering computer files.

### Background Art

A known multi-user computing configuration includes a number of client computer workstations with independent processing and data storage all connected to a common fileserver by a network, for example a local area network (LAN). The workstations and fileserver are typically personal computers (PCs) interconnected by any one currently available of several networking arrangements.

The fileserver generally has a data storage medium, eg one or more hard discs, partitioned into a number of volumes of memory which are configured to be accessible as individual virtual discs by the clients. The clients (ie workstations) are provided with access to one ore more of these separate volumes as locally named drives, eg drives x:, y:, and so on.

The client-accessible volumes are mapped to the fileserver volumes either as one-to-one, many-to-one, or many-to-many mappings. In a one-to-one mapping a single client is mapped to a particular fileserver volume; in a many-to-one mapping, two or more clients are each mapped to a particular common fileserver volume; in a many-to-many mapping two more clients can each access two or more common fileserver volumes. A given system configuration will generally have various combinations of such mappings. Each client can modify files to which it has access on the volumes of the fileserver to which the client is mapped.

There is a general requirement that the fileserver volumes should be recoverable to a previous, sound state should there be any fault of the fileserver or corruption of files stored on it or to allow a client to restore a previous version of a modified file or recover a deleted file. A common approach is to use a tape stream back-up which records all the file changes. However, file recovery is very slow and it can take several hours to search the tape for the data required to restore the files to the desired state.

An alternative approach for file recovery has been to include in the network a dedicated computer with secondary hard disc storage device which is set to automatically back-up all the client hard drives at regular intervals, eg once per day. Data storage requirements are reduced by employing known techniques such as data compression, elimination of redundant or duplicate files and delta blocking in which file changes are stored. The system administrator generally determines what is retained in the back-up system, eg in terms of number of versions of a given file, maximum length of time stored and so on.

The clients can access this back up storage as part of their local directory structure as they can the fileserver volumes and, for example, can select which version of a file, stored in the back-up system is to be restored. However, this method of backing-up client files on a secondary hard disc storage device, allowing a client to revert or restore a previous version of a file generated by the client, does not obviate the requirement for a back-up for the fileserver so known back-up systems, eg the above described tape streamer, are used in addition with the secondary back-up system. So, for example, if a user or client wishes to restore a deleted file it can be recovered relatively quickly from the back-up system, which restoration will then be mapped, ie copied, to the fileserver volume and will then be backed-up on the fileserver tape streamer to be used for disaster recovery of the fileserver. However, the fast secondary back-up storage cannot be used to reset the server as all versions of the file at a given moment in time are not necessarily present.

### SUMMARY OF THE INVENTION

The present invention provides a fileserver for use in a computer network including one or more client computers and the fileserver, the fileserver including a data store partitioned into one or more client-accessible volumes and in which:
a) the data store is also partitioned into one or more back-up volumes; and the fileserver is arranged to:
b) detect when a client modifies the contents of a file of a client-accessible volume;
c) store in a corresponding back-up volume data which will permit reversal of the modification of the contents of said file;
d) detect if a client requests restoration of said file to a previous version; and
e) restore said file to the requested previous version on detecting said request.

A client can restore or recover corrupted, deleted and previous versions of files as stored on the fileserver, and to which they have access, even if they originated from another client. The recovery can be by any convenient technique including presently known methods of storing data which permit file restoration and permitting clients to view files available for restoration. A client is not, in contrast to the prior art system which employs the above described secondary storage device in the above described network, restricted to restoring files that originated from that client.

The fileserver may be arranged to determine when data which will permit reversal of a given modification of the contents of said client-accessible volume is to be deleted from the fileserver from time to time. This is to limit the amount of data to be stored in the back-up volume.

The fileserver may also include a tape streaming back-up system to provided for disaster recovery of the fileserver in the usual manner.

A key aspect of the present invention is that the back-up of files on the back-up volumes of the fileserver is event driven in that relevant data is stored on modifying a file rather than intermittent back-up being made as a time driven activity, according to locally implemented back-up rules.

### DESCRIPTION OF THE DRAWINGS

An exemplary embodiment of the present invention will now be described, by way of example only, with reference to the accompanying drawings of which:
Figure 1 is a schematic diagram of a fileserver according to the present invention; and

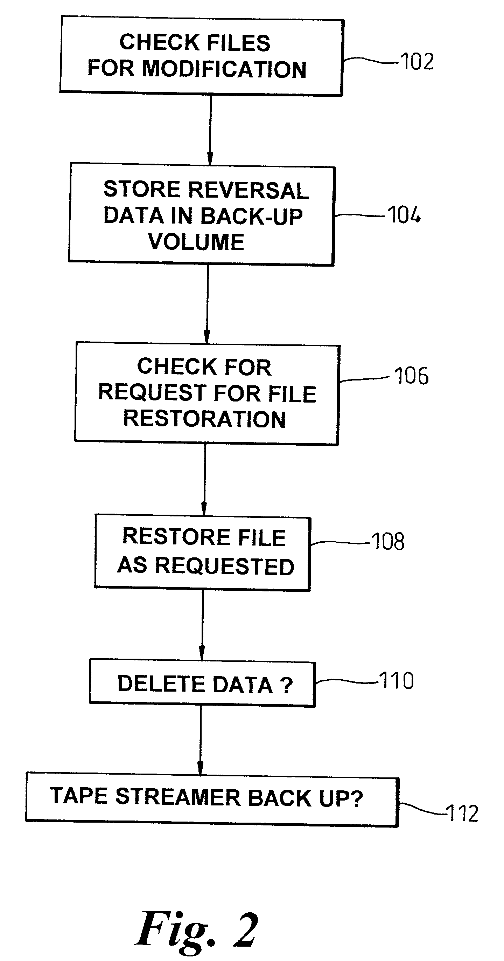

Figure 2 is a schematic flowchart or method of operating a fileserver according to the present invention.

### DETAILED DESCRIPTION OF EMBODIMENTS

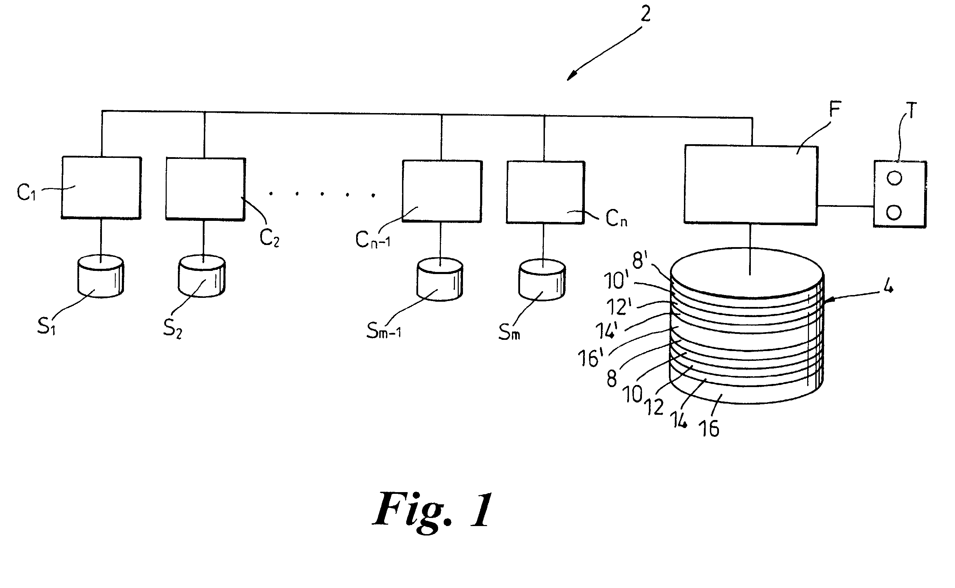

Referring to Figure 1, an exemplary computer network 2 incorporating the present invention includes n client computers C₁ to Cₙ having associated with them respective mass data storage devices S₁ to Sₘ and a file server F with associated mass data storage device 4. The network may be based on any convenient network protocol, eg and ethernet network, and in which the clients and fileservers PC computers. Each mass storage device (data store) similarly may be any convenient device or group of devices which support read/write requests, for example magnetic disc drives, optical discs and so on.

The data store 4 is partitioned into a number of volumes 8, 10, 12, 14, 16 which appear as virtual drives on various ones of the clients C₁ to Cₙ. In this embodiment it will be assumed client C₁ can view volume 8 as a virtual drive r:, clients C₁ and C₂ can view volume 10 as virtual drives s: and t:, respectively, and clients Cₙ₋₁ and Cₙ can view volumes 12, 14 and 16 as virtual drives u:, v:, w: and x:, y:, z:, respectively. This provides, in known manner, a network in which client C₁ can access a file on volume 8 and manipulate it as its access conditions allow, eg to modify or delete the file. If C₁ has a one-to-one mapping with volume 8 only C₁ can do so. In the case of volume 10, clients C₁ and C₂ both have access to it and so, if permitted, both may modify and delete files in volume 10. This is an example of a many-to-one mapping of client to server volume. Clients Cₙ₋₁ and Cₙ, on the other hand, if their permissions allow, can each modify and delete files on any of volumes 12 to 16, an example of a many-to-many client to server volume mapping.

In accordance with the present invention, the fileserver also has associated with it a number of back-up volumes 8', 10', 12', 14' and 16' in which back up data is stored, a back up volume corresponding to each of volumes 8 to 16. The fileserver F is arranged, by virtue of appropriate software running on the server F, to detect when the contents of any of the volumes 8 to 16 is modified by client (step 102) and to generate and store in the associated back up volume 8' to 16' that data which will permit reversal of the modification made to that volume, in any convenient manner (step 104).
The network is arranged such that the files of client-accessible volumes which are available for restoration are viewable at the clients and can be selected for restoration, eg reinstatement of a previously deleted file. The fileserver is arranged to detect such a request to restore a file on the fileserver to a previous state (step 106) and carry out the required file restoration when so requested (step 108). Again, methods of file restoration, per se, are well known in the field and will not be described here in any detail.

A decision is taken (step 110) as to whether any back-up data should be deleted from the back-up volumes 8' to 16'.

A tape streamer T is connected to the fileserver F and backs-up data as desired (step 112) in known manner to provide for disaster recovery as necessary but does not, as in prior art arrangements, need to be used to restore individual corrupted files, as any client C₁ with permission can do so by use of the data stored on the fileserver fast access data store 4, back-up volumes 8' to 16'.

Any convenient techniques may be employed to obtain and store data permitting file modification reversal, including data compression techniques, redundant file elimination and delta blocking.

## Claims

1. A fileserver for use in a computer network including one or more client computers and the fileserver, the fileserver including a data store partitioned into one or more client-accessible volumes and in which:
a) the data store is also partitioned into one or more back-up volumes; and the fileserver is arranged to:
b) detect when a client modifies the contents of a file of a client-accessible volume;
c) store in a corresponding back-up volume data which will permit reversal of the modification of the contents of said file;
d) detect if a client requests restoration of said file to a previous version; and
e) restore said file to the requested previous version on detecting said request.

2. A fileserver as claimed in claim 1 in which the fileserver is arranged to determine when data which will permit reversal of a given modification of the contents of said client-accessible volume is to be deleted from the fileserver.

3. A fileserver as claimed in claim 1 or 2 including a tape streaming back-up system.

4. A method of operating a fileserver of a computer network also including one or more client computers, the fileserver including a data store partitioned into one or more client-accessible volumes, the method including:
a) detecting when a client modifies the contents of a file of a client-accessible volume;
b) storing in a corresponding back-up volume data which will permit reversal of the modification of the contents of said file;
c) detecting if a client requests restoration of said file to a previous version; and
d) restoring said file to the requested previous version on detecting said request.

5. A method as claimed in claim 4 including the step of determining when data which will permit reversal of a given modification of the contents of said client-accessible volume is to be deleted from the fileserver.

6. A method as claimed in claim 4 or 5 including backing-up the client-accessible volumes on a tape streaming back-up system.
